(19) Europäisches Patentamt
European Patent Office
Office européen des brevets

(11) **EP 3 340 615 B1**

(12) **EUROPEAN PATENT SPECIFICATION**

(45) Date of publication and mention
of the grant of the patent:
**04.12.2019 Bulletin 2019/49**

(21) Application number: **16836538.5**

(22) Date of filing: **01.08.2016**

(51) Int Cl.:
*H04N 7/18* (2006.01)          *G06K 9/00* (2006.01)
*G06K 9/46* (2006.01)          *G08C 17/02* (2006.01)

(86) International application number:
**PCT/CN2016/092694**

(87) International publication number:
**WO 2017/028674 (23.02.2017 Gazette 2017/08)**

(54) **METHOD AND SYSTEM FOR VISUALLY AND REMOTELY CONTROLLING TOUCH-ENABLED DEVICE, AND RELEVANT DEVICE**

VERFAHREN UND SYSTEM ZUR VISUELLEN UND ENTFERNTEN STEUERUNG EINER BERÜHRUNGSFÄHIGEN VORRICHTUNG SOWIE ENTSPRECHENDE VORRICHTUNG

PROCÉDÉ ET SYSTÈME DE COMMANDE VISUELLE ET À DISTANCE D'UN DISPOSITIF TACTILE, ET DISPOSITIF CORRESPONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.08.2015 CN 201510508032**

(43) Date of publication of application:
**27.06.2018 Bulletin 2018/26**

(73) Proprietor: **Huawei Technologies Co., Ltd.
Longgang District
Shenzhen, Guangdong 518129 (CN)**

(72) Inventors:
• **LIN, Yimin
Shenzhen
Guangdong 518129 (CN)**

• **LIAN, Shiguo
Shenzhen
Guangdong 518129 (CN)**

(74) Representative: **Pfenning, Meinig & Partner mbB
Patent- und Rechtsanwälte
Joachimsthaler Straße 10-12
10719 Berlin (DE)**

(56) References cited:
EP-A2- 2 372 495          CN-A- 101 622 871
CN-A- 102 204 271          CN-A- 104 301 661
CN-A- 105 141 913          KR-A- 20090 098 270

**Description**

**TECHNICAL FIELD**

Embodiments of the present invention relate to the field of information technologies, and more specifically, to a visual remote control method and system for a touch-controllable device, and a related device.

**BACKGROUND**

Development of an Internet of Things (IoT for short) technology has resulted in an increasing quantity of touch-controllable devices that can be remotely controlled. An existing technical solution for remotely controlling a touch-controllable device requires that a user select an ID of a to-be-controlled touch-controllable device from a device list. If there are many types and a large quantity of controllable touch-controllable devices, it is quite difficult to search for corresponding hardware. A remote device (for example, a mobile phone, a tablet computer, or a computer) configured to remotely control a touch-controllable device can learn of a working status of the touch-controllable device only by using a graphical interface.

See also publication EP 2 372 495 for a remote control system using image captured by a camera and object recognition for selecting an object that can be remotely controlled by a user.

**SUMMARY**

Embodiments of the present invention provide a visual remote control method and system for a touch-controllable device, and a related device, so that a user can conveniently determine and control, from a video image, a touch-controllable device that can be remotely controlled.

According to a first aspect, an embodiment of the present invention provides a visual remote control method for a touch-controllable device, where the method is executed by a control center device in a remote control system, and the method includes: obtaining, by the control center device, a video image; determining, by the control center device, an identifier of each of at least one touch-controllable device in the video image; and sending, by the control center device, the video image and the identifier of each touch-controllable device to a remote device, so that a user can control the touch-controllable device in the video image by using the remote device.

With reference to the first aspect, in a first possible implementation, the determining, by the control center device, an identifier of each of at least one touch-controllable device in the video image includes: performing, by the control center device, local-feature extraction on the video image; matching an extracted local feature with a visual feature of a touch-controllable device stored in a hardware database, to determine whether a visual feature, matching the local feature, of a touch-controllable device exists in the hardware database; and if the visual feature, matching the local feature, of the touch-controllable device exists in the hardware database, determining an identifier of the touch-controllable device that is included in the video image and that is corresponding to the matched visual feature.

With reference to the first possible implementation, in a second possible implementation, the hardware database includes attribute information of N touch-controllable devices, where the attribute information includes identifiers of the touch-controllable devices, visual features of the touch-controllable devices, hardware application programming interfaces APIs of the touch-controllable devices, and control user interfaces UIs of the touch-controllable devices.

With reference to the second possible implementation, in a third possible implementation, before the determining, by the control center device, an identifier of each of at least one touch-controllable device in the video image, the method further includes: obtaining, by the control center device, the attribute information of the N touch-controllable devices; and storing, by the control center device, the attribute information of the N touch-controllable devices in the hardware database.

With reference to the third possible implementation, in a fourth possible implementation, the obtaining, by the control center device, the attribute information of the N touch-controllable devices includes: receiving, by the control center device, attribute information sent by each of the N touch-controllable devices; or receiving, by the control center device, an identifier sent by each of the N touch-controllable devices, and obtaining, according to the identifiers of the N touch-controllable devices, the visual features of the N touch-controllable devices, the APIs of the N touch-controllable devices, and the control UIs of the N touch-controllable devices from a server that stores the attribute information of the N touch-controllable devices.

With reference to the first aspect, in a fifth possible implementation, the determining, by the control center device, an identifier of each of at least one touch-controllable device in the video image includes: receiving, by the control center device, the identifier of each touch-controllable device sent by a video capture device.

With reference to any one of the first aspect or the foregoing possible implementations, in a sixth possible implementation, the method further includes: receiving, by the control center device, first adjustment information sent by the remote device, where the first adjustment information is used to adjust an adjustable running parameter of a first touch-controllable device, and the at least one touch-controllable device includes the first touch-controllable device; and sending, by the control center device, the first adjustment information to the first touch-controllable device, so that the first touch-controllable device adjusts the adjustable running parameter according to the first adjustment information.

According to a second aspect, an embodiment of the present invention provides a visual remote control system for a touch-controllable device, where the system includes a control center device, a remote device, and N touch-controllable devices, where N is a positive integer greater than or equal to 1; the control center device is configured to obtain a video image; the control center device is further configured to determine an identifier of each touch-controllable device that is in the video image and that is in the N touch-controllable devices; the control center device is further configured to send the video image and the identifier of each touch-controllable device to the remote device; the remote device is configured to receive the video image and the identifier of each touch-controllable device that are sent by the control center device; and the remote device is further configured to present the video image and the identifier of each touch-controllable device on a display interface.

With reference to the second aspect, in a first possible implementation of the second aspect, the control center device is specifically configured to: perform local-feature extraction on the video image; match an extracted local feature with a visual feature of a touch-controllable device stored in a hardware database, to determine whether a visual feature, matching the local feature, of a touch-controllable device exists in the hardware database; and if the visual feature, matching the local feature, of the touch-controllable device exists in the hardware database, determine an identifier of the touch-controllable device that is included in the video image and that is corresponding to the matched visual feature.

With reference to the first possible implementation of the second aspect, in a second possible implementation of the second aspect, the hardware database includes attribute information of the N touch-controllable devices, where the attribute information includes identifiers of the touch-controllable devices, visual features of the touch-controllable devices, hardware application programming interfaces APIs of the touch-controllable devices, and control user interfaces UIs of the touch-controllable devices.

With reference to the second possible implementation of the second aspect, in a third possible implementation of the second aspect, the control center device is further configured to obtain the attribute information of the N touch-controllable devices, and store the attribute information of the N touch-controllable devices in the hardware database.

With reference to the third possible implementation of the second aspect, in a fourth possible implementation of the second aspect, the control center device is specifically configured to receive attribute information sent by each of the N touch-controllable devices; or the control center device is specifically configured to receive an identifier sent by each of the N touch-controllable devices, and obtain, according to the identifiers of the N touch-controllable devices, the visual features of the N touch-controllable devices, the APIs of the N touch-controllable devices, and the control UIs of the N touch-controllable devices from a server that stores the attribute information of the N touch-controllable devices.

With reference to the second aspect, in a fifth possible implementation of the second aspect, the system further includes a video capture device, where the video capture device is configured to obtain the video image, and determine the identifier of each touch-controllable device in the video image; the video capture device is further configured to send the video image and the identifier of each touch-controllable device to the control center device; and the control center device specifically receives the video image and the identifier of each touch-controllable device that are sent by the video capture device.

With reference to any one of the second aspect or the foregoing possible implementations of the second aspect, in a sixth possible implementation of the second aspect, the remote device is further configured to obtain first input, where the first input is used to select a first touch-controllable device, and the first touch-controllable device is a touch-controllable device in the video image; the remote device is further configured to obtain a control UI of the first touch-controllable device and an API of the first touch-controllable device; and the remote device is further configured to display the control UI of the first touch-controllable device on the display interface.

With reference to the sixth possible implementation of the second aspect, in a seventh possible implementation of the second aspect, the remote device is further configured to obtain second input that is used to adjust an adjustable running parameter of the first touch-controllable device, and send first adjustment information to the control center, where the first adjustment information is used to adjust the adjustable running parameter of the first touch-controllable device; the control center device is further configured to send the received first adjustment information to the first touch-controllable device; and the first touch-controllable device is further configured to adjust the corresponding adjustable running parameter according to the first adjustment information.

According to a third aspect, an embodiment of the present invention provides a network device, where the device includes: an obtaining unit, configured to obtain a video image; a determining unit, configured to determine an identifier of each of at least one touch-controllable device in the video image; and a sending unit, configured to send the video image and the identifier of each touch-controllable device to a remote device, so that a user can control the touch-controllable device in the video image by using the remote device.

With reference to the third aspect, in a first possible implementation of the third aspect, the determining unit is specifically configured to: perform local-feature extraction on the video image; match an extracted local feature with a visual feature of a touch-controllable device stored in a hardware database, to determine whether a visual feature, matching the local feature, of a touch-controllable device exists in the hardware database; and if the visual feature, matching the local feature, of the touch-controllable device exists in the hardware database, determine an identifier of the touch-controllable device that is included in the video image and that is corresponding to the matched visual feature.

With reference to the first possible implementation of the third aspect, in a second possible implementation of the third aspect, the hardware database includes attribute information of N touch-controllable devices, where the attribute information includes identifiers of the touch-controllable devices, visual features of the touch-controllable devices, hardware application programming interfaces APIs of the touch-controllable devices, and control user interfaces UIs of the touch-controllable devices.

With reference to the second possible implementation of the third aspect, in a third possible implementation of the third aspect, the obtaining unit is further configured to obtain the attribute information of the N touch-controllable devices; and the determining unit is further configured to store the attribute information of the N touch-controllable devices in the hardware database.

With reference to the third possible implementation of the third aspect, in a fourth possible implementation of the third aspect, the obtaining unit is specifically configured to receive attribute information sent by each of the N touch-controllable devices; or the obtaining unit is specifically configured to receive an identifier sent by each of the N touch-controllable devices, and obtain, according to the identifiers of the N touch-controllable devices, the visual features of the N touch-controllable devices, the APIs of the N touch-controllable devices, and the control UIs of the N touch-controllable devices from a server that stores the attribute information of the N touch-controllable devices.

With reference to the third aspect, in a fifth possible implementation of the third aspect, the obtaining unit is specifically configured to receive the identifier of each touch-controllable device sent by a video capture device.

With reference to any one of the third aspect or the foregoing possible implementations of the third aspect, in a sixth possible implementation of the third aspect, the obtaining unit is further configured to receive first adjustment information sent by the remote device, where the first adjustment information is used to adjust an adjustable running parameter of a first touch-controllable device, and the at least one touch-controllable device includes the first touch-controllable device; and the sending unit is further configured to send the first adjustment information to the first touch-controllable device, so that the first touch-controllable device adjusts the adjustable running parameter according to the first adjustment information.

According to a fourth aspect, an embodiment of the present invention provides a device for controlling a touch-controllable device, where the device includes: a receiving unit, configured to receive a video image and an identifier of each touch-controllable device that are sent by a control center device; and a display unit, configured to present the video image and the identifier of each touch-controllable device on a display interface.

With reference to the fourth aspect, in a first possible implementation of the fourth aspect, the device further includes an obtaining unit, where the obtaining unit is configured to obtain first input, where the first input is used to select a first touch-controllable device, and the first touch-controllable device is a touch-controllable device in the video image; the obtaining unit is further configured to obtain a control UI of the first touch-controllable device and an API of the first touch-controllable device; and the display unit is further configured to display the control UI of the first touch-controllable device on the display interface.

With reference to the first possible implementation of the fourth aspect, in a second possible implementation of the fourth aspect, the obtaining unit is further configured to obtain second input that is used to adjust an adjustable running parameter of the first touch-controllable device; and the device further includes a sending unit, where the sending unit is configured to send first adjustment information to the control center, and the first adjustment information is used to adjust the adjustable running parameter of the first touch-controllable device.

In the foregoing technical solutions, the control center device in the remote control system can obtain the video image, identify the touch-controllable device in the video image, and send the video image and the identifier of the identified touch-controllable device to the remote device. In this way, the user can view, in real time, the video image by using the remote device, and can conveniently determine, from the video image according to the identifier of the touch-controllable device, a touch-controllable device that can be remotely controlled, and further select a touch-controllable device that needs to be controlled. When the user needs to adjust an adjustable running parameter of the touch-controllable device, the user can view an actual running parameter of the controlled touch-controllable device instead of a running parameter, obtained by means of simulation by using a graphical interface, of the touch controllable device.

**BRIEF DESCRIPTION OF DRAWINGS**

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic flowchart of a visual remote control method for a touch-controllable device according to an embodiment of the present invention;

FIG. 2 is a schematic diagram of a visual remote control system for a touch-controllable device according to an embodiment of the present invention;

FIG. 3 is a schematic diagram of another visual remote control system for a touch-controllable device according to an embodiment of the present invention;

FIG. 4 is a schematic diagram of attribute information of two touch-controllable devices;

FIG. 5 is a schematic flowchart of a feature extraction method based on a two-dimensional image;

FIG. 6 is a schematic diagram of a shooting angle V;

FIG. 7 is a schematic flowchart of a feature extraction method based on a three-dimensional depth image;

FIG. 8 is a schematic flowchart of feature identification performed by using a two-dimensional image;

FIG. 9 is a schematic flowchart of feature identification performed by using a three-dimensional depth image;

FIG. 10 is a schematic diagram of displaying a video image and a touch-controllable device on a display interface of a remote device;

FIG. 11 is a schematic diagram of displaying a video image, a selected touch-controllable device, and a UI of the selected touch-controllable device on a display interface of a remote device;

FIG. 12 is another schematic diagram of displaying a video image, a selected touch-controllable device, and a UI of the selected touch-controllable device on a display interface of a remote device;

FIG. 13 is a structural block diagram of a network device according to an embodiment of the present invention; and

FIG. 14 is a structural block diagram of a device for controlling a touch-controllable device according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

A touch-controllable device in the embodiments of the present invention has at least one adjustable running parameter. A user may adjust the at least one adjustable running parameter by using an application (English: Application, APP for short). For example, the touch-controllable device may be a desk lamp. An adjustable running parameter of the desk lamp may be "on" and "off". Alternatively, the adjustable running parameter of the desk lamp may further include brightness of the lamp. For another example, the touch-controllable device may alternatively be a television. An adjustable running parameter of the television may include on/off, volume, channels, and the like.

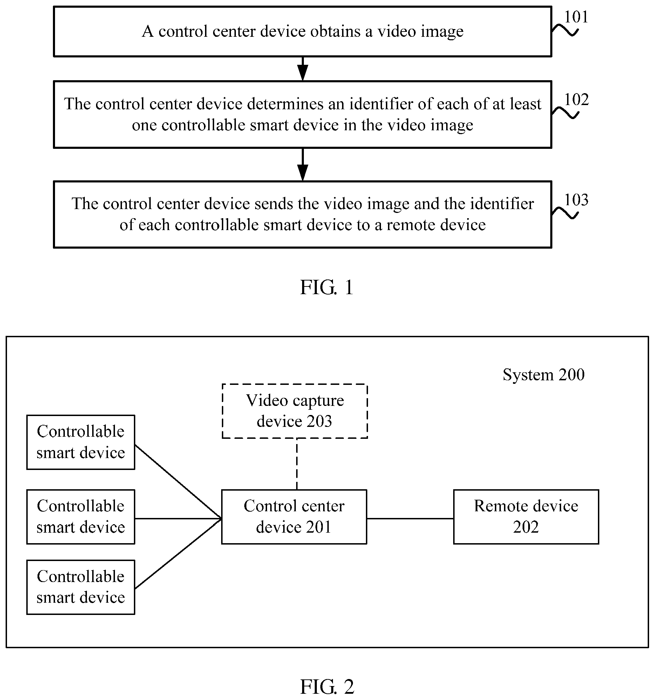

FIG. 1 is a schematic flowchart of a visual remote control method for a touch-controllable device according to an embodiment of the present invention. The method shown in FIG. 1 is executed by a control center device in a remote control system.

101: The control center device obtains a video image.

102: The control center device determines an identifier of each of at least one touch-controllable device in the video image.

103: The control center device sends the video image and the identifier of each touch-controllable device to a remote device, so that a user can control the touch-controllable device in the video image by using the remote device.

According to the method shown in FIG. 1, the control center device in the remote control system can obtain the video image, identify the touch-controllable device in the video image, and send the video image and the identifier of the identified touch-controllable device to the remote device. In this way, the user can view, in real time, the video image by using the remote device, and can conveniently determine, from the video image according to the identifier of the touch-controllable device, a touch-controllable device that can be remotely controlled, and further select a touch-controllable device that needs to be controlled. When the user needs to adjust an adjustable running parameter of the touch-controllable device, the user can view an actual running parameter of the controlled touch-controllable device instead of simulated a running parameter by using a graphical interface, of the touch controllable device.

Optionally, in an embodiment, the determining, by the control center device, an identifier of each of at least one touch-controllable device in the video image includes: performing, by the control center device, local-feature extraction on the video image; matching an extracted local feature with a visual feature of a touch-controllable device stored in a hardware database, to determine whether a visual feature, matching the local feature, of a touch-controllable device exists in the hardware database; and if the visual feature, matching the local feature, of the touch-controllable device exists in the hardware database, determining an identifier of the touch-controllable device that is included in the video image and that is corresponding to the matched visual feature. The hardware database includes attribute information of N touch-controllable devices, where the attribute information includes identifiers of the touch-controllable devices, visual features of the touch-controllable devices, application programming interfaces (English: Application Programming Interface, API for short) of the touch-controllable devices, and control user interfaces (English: User Interface, UI for short) of the touch-controllable devices.

Further, before the control center device determines the identifier of each of the at least one touch-controllable device in the video image, the control center device may further obtain the attribute information of the N touch-controllable devices. The control center may store the attribute information of the N touch-controllable devices in the hardware database.

The obtaining, by the control center device, the attribute information of the N touch-controllable devices includes: receiving, by the control center device, attribute information sent by each of the N touch-controllable devices; or receiving, by the control center device, an identifier sent by each of the N touch-controllable devices, and obtaining, according to the identifiers of the N touch-controllable devices, the visual features of the N touch-controllable devices, the APIs of the N touch-controllable devices, and the control UIs of the N touch-controllable devices from a server that stores the attribute information of the N touch-controllable devices.

Optionally, in another embodiment, the determining, by the control center device, an identifier of each of at least one touch-controllable device in the video image includes: receiving, by the control center device, the identifier of each touch-controllable device sent by a video capture device.

Further, the method may further include: receiving, by the control center device, first adjustment information sent by the remote device, where the first adjustment information is used to adjust an adjustable running parameter of a first touch-controllable device, and the at least one touch-controllable device includes the first touch-controllable device; and sending, by the control center device, the first adjustment information to the first touch-controllable device, so that the first touch-controllable device adjusts the adjustable running parameter according to the first adjustment information.

Further, the method may further include: determining, by the control center device, coordinates of the first touch-controllable device, and sending the coordinates of the first touch-controllable device to the remote device.

FIG. 2 is a schematic diagram of a visual remote control system for a touch-controllable device according to an embodiment of the present invention. As shown in FIG. 2, the system 200 includes a control center device 201, a remote device 202, and N touch-controllable devices, where N is a positive integer greater than or equal to 1.

The control center device 201 is configured to obtain a video image.

The control center device 201 is further configured to determine an identifier of each touch-controllable device that is in the video image and that is in the N touch-controllable devices.

The control center device 201 is further configured to send the video image and the identifier of each touch-controllable device to the remote device 202.

The remote device 202 is configured to receive the video image and the identifier of each touch-controllable device that are sent by the control center device 201.

The remote device 202 is further configured to present the video image and the identifier of each touch-controllable device on a display interface.

According to the system shown in FIG. 2, the control center device can identify the touch-controllable device in the video image, and send the identifier of the touch-controllable device to the remote device. In this way, a user can conveniently determine, according to the identifier of the touch-controllable device and from the video image presented on the display interface of the remote device, a touch-controllable device that can be remotely controlled, and further select a touch-controllable device that needs to be controlled.

The control center device 201 is specifically configured to: perform local-feature extraction on the video image; match an extracted local feature with a visual feature of a touch-controllable device stored in a hardware database, to determine whether a visual feature, matching the local feature, of a touch-controllable device exists in the hardware database; and if the visual feature, matching the local feature, of the touch-controllable device exists in the hardware database, determine an identifier of the touch-controllable device that is included in the video image and that is corresponding to the matched visual feature. The hardware database includes attribute information of the N touch-controllable devices, where the attribute information includes identifiers of the touch-controllable devices, visual features of the touch-controllable devices, APIs of the touch-controllable devices, and control UIs of the touch-controllable devices. Optionally, the hardware database may be integrated into the control center device 201, may be an independent device, or may be integrated into another device.

The control center device 201 is further configured to obtain the attribute information of the N touch-controllable devices, and store the attribute information of the N touch-controllable devices in the hardware database.

Optionally, the control center device 201 is specifically configured to receive attribute information sent by each of the N touch-controllable devices; or the control center device 201 is specifically configured to receive an identifier sent by each of the N touch-controllable devices, and obtain, according to the identifiers of the N touch-controllable devices, the visual features of the N touch-controllable devices, the APIs of the N touch-controllable devices, and the control UIs of the N touch-controllable devices from a server that stores the attribute information of the N touch-controllable devices.

Optionally, in an embodiment, the system 200 may further include a video capture device 203. The video capture device 203 is configured to obtain the video image, and determine the identifier of each touch-controllable device in the video image. The video capture device 203 may be further configured to send the video image and the identifier of each touch-controllable device to the control center device 201. The control center device 201 is specifically configured to receive the video image and the identifier of each touch-controllable device that are sent by the video capture device.

Further, the remote device 202 is further configured to obtain first input. The first input is used to select a first touch-controllable device, and the first controllable smart device is a touch-controllable device in the video image. The remote device 202 is further configured to obtain a control UI of the first touch-controllable device and an API of the first touch-controllable device. The remote device 202 is further configured to display the control UI of the first touch-controllable device on the display interface. Optionally, the remote device 202 may directly obtain the control UI of the first touch-controllable device and the API of the first touch-controllable device from the hardware database. The remote device 202 may alternatively obtain the control UI of the first touch-controllable device and the API of the first touch-controllable device by using the control center device 201.

Further, the remote device 202 is further configured to obtain second input that is used to adjust an adjustable running parameter of the first touch-controllable device, and send a first adjustment information to the control center device 201, where the first adjustment information is used to adjust the adjustable running parameter of the first touch-controllable device. The control center device is further configured to send the received first adjustment information to the first controllable device. The first controllable device is configured to adjust the corresponding adjustable running parameter according to the first adjustment information.

To help a person skilled in the art better understand the present invention, the following describes the technical solutions of the present invention with reference to specific embodiments. It can be understood that the specific embodiments are merely intended to facilitate better understanding of the present invention, but not to limit the present invention.

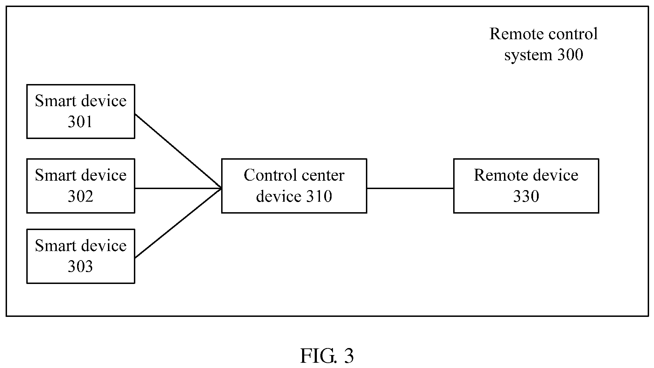

FIG. 3 is a schematic diagram of another visual remote control system for a touch-controllable device according to an embodiment of the present invention. As shown in FIG. 3, the remote control system 300 includes three touch-controllable devices: a touch-controllable device 301, a touch-controllable device 302, and a touch-controllable device 303. The remote control system 300 further includes a control center device 310 and a remote device 330.

When joining into the remote control system 300, the touch-controllable device 301, the touch-controllable device 302, and the touch-controllable device 303 send registration information to the control center device 310 to accomplish a registration process. The registration information may include attribute information of the touch-controllable devices, and the attribute information includes identifiers of the touch-controllable devices, visual features of the touch-controllable devices, APIs of the touch-controllable devices, and control UIs of the touch-controllable devices. Alternatively, the registration information may include only identifiers of the touch-controllable devices. The control center device 310 receives registration information sent by each of the touch-controllable devices. When the registration information includes the attribute information of the touch-controllable devices, the control center device 310 may store, in a hardware feature database, the attribute information of the touch-controllable devices in the registration information. The hardware feature database may be located in the control center device 310, may be independent hardware, or may be integrated into other hardware (for example, a server). This is not limited in the present invention. When the registration information includes only the identifiers of the touch-controllable devices, the control center device 310 may obtain, according to the identifiers of the touch-controllable devices, the visual features, APIs, and control UIs of the corresponding touch-controllable devices from a server that stores the attribute information of the touch-controllable devices. The control center device 310 may store the obtained visual features, APIs, and control UIs in the hardware feature database.

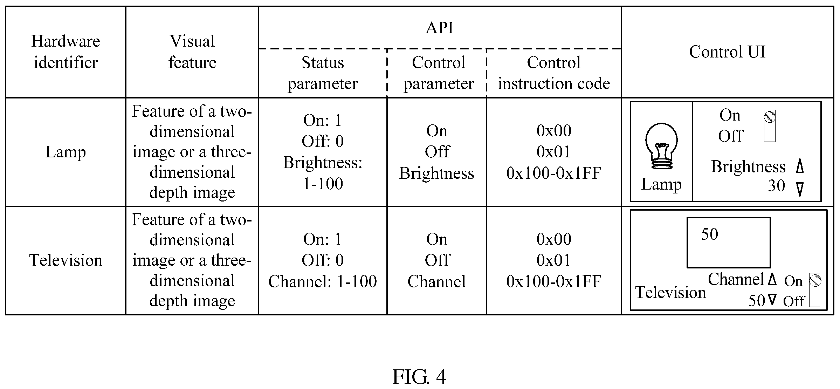

FIG. 4 is a schematic diagram of attribute information of two touch-controllable devices.

Optionally, in addition to the identifiers, visual features, APIs, and control UIs of the touch-controllable devices, the attribute information may include another element, for example, a supported communications protocol, a supported power supply standard, or the like.

The visual features prestored in the touch-controllable devices or the server are measured in advance. The visual feature model library May be a feature of a two-dimensional image, or may be a feature of a three-dimensional depth image. A person skilled in the art can understand that, because a touch-controllable device may be placed in multiple manners and an apparatus for controlling a touch-controllable device may obtain an image of the touch-controllable device from multiple angles, visual features, obtained when different shooting angles are used, of the touch-controllable device may be measured in advance.

The following separately describes two feature creation methods.

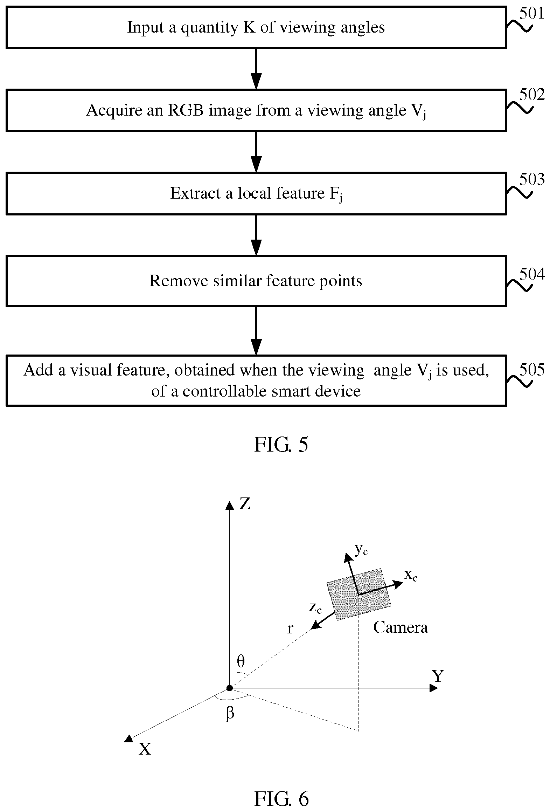

FIG. 5 is a schematic flowchart of a feature extraction method based on a two-dimensional image.

501: Input a quantity K of viewing angles.

The quantity K of viewing angles V from which a camera shoots a touch-controllable device is set. The viewing angle V indicates a relationship between an optical axis $z_c$ of the camera and a coordinate system of the touch-controllable device. A specific relationship is shown by the following formula:

$$V = [\theta, \beta, r] \quad \text{(Formula 1.1)}$$

where $\theta \in [0,180°]$, $\beta \in [0,360°]$, and r is a distance between the camera and an origin of the coordinate system of the touch-controllable device.

FIG. 6 is a schematic diagram of a shooting angle V, where X, Y, and Z and $x_c$, $y_c$, and $z_c$ are coordinate systems of a touch-controllable device and a camera respectively, $\theta \in [0,180°]$, $\beta \in [0,360°]$, and r is a distance between the camera and an origin of the coordinate system of the touch-controllable device.

Therefore, the quantity K of viewing angles and the shooting angle V are preset according to a texture feature and shape complexity of the touch-controllable device, so as to comprehensively record a visual feature set, obtained when different viewing angles are used, of the touch-controllable device.

502: Acquire an RGB image from a viewing angle $V_j$, that is, acquire the RGB image of the touch-controllable device from the viewing angle $V_j$ by using an RGB camera, where $j \in [1,K]$.

503: Extract a local feature $F_j$, that is, extract, from the RGB image, the visual feature $F_j$ with rotation and scale invariance, where $F_j$ may be represented as the following n-dimensional vector:

$$F_j = [a_1, a_2, \ldots, a_n] \quad \text{(Formula 1.2)}$$

where a; is a real number, and n usually has different values when different local-feature extraction methods are used. Common feature extraction methods include scale-invariant feature transform (SIFT for short), speeded-up robust feature (SURF for short), "oriented FAST (Features from Accelerated Segment Test,) and rotated BRIEF (Binary Robust Independent Elementary Features,) (English: Oriented Fast and Rotated BRIEF, ORB for short), and fast retina keypoint (English: Fast Retina Keypoint, FREAK for short)", and the like. When feature extraction is performed by using SIFT, a value of n is 128. When feature extraction is performed by using SURF, a value of n is 64. When feature extraction is performed by using ORB, a value of n is 32. When feature extraction is performed by using FREAK, a value of n is 64.

504: Remove similar feature points, that is, remove a feature point pair with relatively high similarity from a feature point set according to a distance measurement function (for example, a Euclidean distance, a Hamming distance, or a Mahalanobis distance) of a feature descriptor F, to ensure feature descriptor uniqueness.

505: Add a visual feature, obtained when the viewing angle $V_j$ is used, of the touch-controllable device, that is, store the local-feature descriptor F and the viewing angle V in a visual feature model library Model library $M(V_j, F_j)$.

After the visual feature obtained when the viewing angle $V_j$ is used is determined, a visual feature obtained when another viewing angle is used may be determined. A process of determining the visual feature obtained when the other viewing angle is used is the same as a process of determining the visual feature obtained when the viewing angle $V_j$ is used. That is, visual features obtained when all viewing angles are used may be determined and then stored in the visual feature model library M by repeating step 502 to step 505. In this case, the visual feature model library M stores local-feature descriptors F and corresponding viewing angle parameters V obtained when different viewing angles are used. The visual feature model library May be stored in the corresponding touch-controllable device or may be stored in a server. It can be understood that, when the visual feature is stored in the server, an identifier of smart hardware corresponding to the visual feature also needs to be stored. When the touch-controllable device is added to a remote control system, if the touch-controllable device does not store the visual feature, the touch-controllable device may send an identifier of the touch-controllable device to a control center device. The control center device may obtain, according to the identifier of the touch-controllable device, the visual feature of the touch-controllable device from the server that stores the visual feature. If the touch-controllable device stores the visual feature, the touch-controllable device may simultaneously send the stored visual feature and the identifier to the control center device, so that the control center device can determine, from a video image by using the visual feature, whether the touch-controllable device is stored.

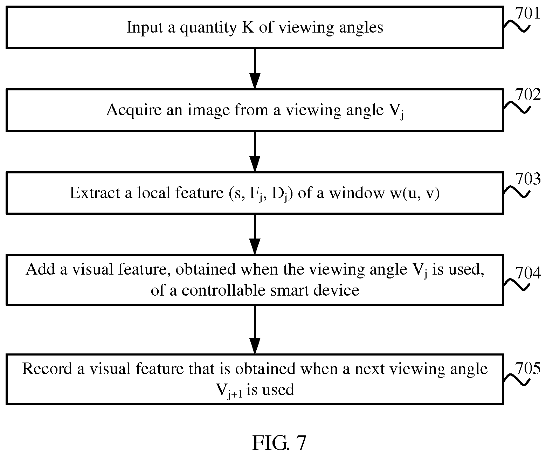

FIG. 7 is a schematic flowchart of a feature extraction method based on a three-dimensional depth image.

701: Input a quantity K of viewing angles.

The quantity K of viewing angles V from which a camera shoots a touch-controllable device is set according to a texture feature and shape complexity of the touch-controllable device, so as to comprehensively record a visual feature set, obtained when different viewing angles are used, of the touch-controllable device. A meaning of the viewing angle V is the same as a meaning of a viewing angle V used during feature extraction performed by using a two-dimensional image, and details do not need to be described herein.

702: Acquire an image from a viewing angle $V_j$, that is, acquire an RGB image and a depth image of a touch-controllable device from the viewing angle $V_j$ by using an RGBD camera, where $j \in [1, K]$.

703: Extract a local feature $(s, F_j, D_j)$ of a window $w(u, v)$.

Specifically, a point whose coordinates are $(u, v)$ is randomly selected from the RGB image. A length and a width of the feature extraction window $w(u, v)$ are both $s \times L$, where L is a size of an initial feature extraction window, s is a scale of a current feature extraction window, and s is represented by using the following formula:

$$s = \frac{D}{d} \quad \text{(Formula 1.3)}$$

where d is a depth value corresponding to the depth image coordinates $(u, v)$ at which a current feature point is located, and D is an initial depth constant. For example, L=31 pixels (English: pixels) and D=550 mm may be set according to an actual status of internal and external parameters of a sensor of the RGBD camera that obtains the depth image.

The local feature $F_j(u, v)$ with rotation and scale invariance is extracted from the window w whose image coordinates are $(u, v)$. Common feature extraction methods include SIFT, SURF, ORB, FREAK, and the like. In addition, the depth value $d(u, v)$ is mapped to a three-dimensional coordinate value $D_j(x, y, z)$ according to the intrinsic internal and external parameters of the sensor of the RGBD camera.

704: Add a visual feature, obtained when the viewing angle $V_j$ is used, of the touch-controllable device, that is, store the three-dimensional coordinates $D_j(x, y, z)$ and the previously extracted feature $F_j$ and scale s all in a visual feature model library Model library $M(s, F_j, D_j)$ of the touch-controllable device.

705: Record a visual feature that is obtained when a next viewing angle $V_{j+1}$ is used. The shooting angle $V_{j+1}$ of the RGBD camera is changed, a transformation relation $H(V_j, V_{j+1})$ between coordinate systems of the two viewing angles $V_j$ and $V_{j+1}$ is calculated according to an existing three-dimensional data splicing method such as ICP and SLAM, and image data previously acquired by the RGBD camera is collectively transformed to data that is obtained when the first viewing angle $V_0$ is used. This is specifically shown by the following formula:

$$I_{j+1}^*(\text{RGB}, \text{Depth}) = [\prod_{j=0}^{K} H(V_j, V_{j+1})] I_{j+1}(\text{RGB}, \text{Depth}) \quad \text{(Formula 1.4)}$$

where I(RGB, Depth) represents RGB and depth image data acquired by the RGBD camera.

A similarity to a feature extraction method based on a two-dimensional image lies in that, after the visual feature obtained when the viewing angle $V_j$ is used is determined, a visual feature obtained when another viewing angle is used may be determined. A process of determining the visual feature obtained when the another viewing angle is used is the same as a process of determining the visual feature obtained when the viewing angle $V_j$ is used. That is, visual features obtained when all viewing angles are used may be determined and then stored in the visual feature model library M by repeating step 702 to step 705. In this case, the visual feature model library M stores local-feature descriptors F and corresponding viewing angle parameters V obtained when different viewing angles are used. The visual feature model library May be stored in the corresponding touch-controllable device or may be stored in a server. It can be understood that, when the visual feature is stored in the server, an identifier of smart hardware corresponding to the visual feature also needs to be stored. When the touch-controllable device is added to a remote control system, if the touch-controllable device does not store the visual feature, the touch-controllable device may send an identifier of the touch-controllable device to a control center device. The control center device may obtain, according to the identifier of the touch-controllable device, the visual feature of the touch-controllable device from the server that stores the visual feature. If the touch-controllable device stores the visual feature, the touch-controllable device may simultaneously send the stored visual feature and the identifier to the control center device, so that the control center device can determine, from a video image by using the visual feature, whether the touch-controllable device is stored.

After a registration process of a touch-controllable device is completed, the control center device 310 may identify the registered touch-controllable device. The control center device 310 may determine, by using an obtained video image, coordinates of the touch-controllable device in the video image and an identifier of the touch-controllable device.

Specifically, a method used by the control center device 310 to identify the touch-controllable device is related to a visual-feature composition method of the touch-controllable device. If a visual feature of the touch-controllable device is generated by using a two-dimensional image, the control center device 310 also identifies the touch-controllable device in a manner of obtaining a local feature of a two-dimensional image. If a visual feature of the touch-controllable device is generated by using a three-dimensional depth image, the control center device 310 also identifies the touch-controllable device in a manner of obtaining a local feature of a three-dimensional depth image. The following describes in detail how the control center device 310 identifies the touch-controllable device.

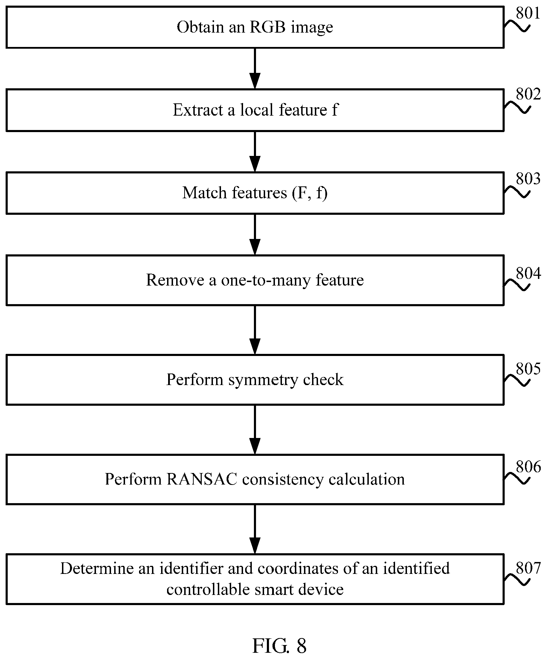

FIG. 8 is a schematic flowchart of feature identification performed by using a two-dimensional image.

801: Obtain an RGB image.

The RGB image is obtained by using a camera. The camera may be integrated into the control center device 310. Alternatively, the camera may be an independent apparatus, and sends the acquired RGB image to the control center device 310. This is not limited in the present invention.

802: Extract a local feature f, that is, extract the local feature from the obtained RGB image. Common methods may be SIFT, SURF, ORB, FREAK, and the like.

803: Match features (F, f).

A visual feature model library $M_C(F_j, V_j)$ of the $C^{th}$ touch-controllable device is indexed in a hardware feature database, where $j \in [1,K]$. All feature descriptors $F_i$ are traversed in an $F_j$ set obtained when the $V_j{}^{th}$ viewing angle is used, where $F_i \in F_j$. An f set is searched for two pairs of optimal match feature points $(F_i, f_k)$ and $(F_i, f_j)$, where a distance (common distance measurement functions include a Euclidean distance, a Hamming distance, a Mahalanobis distance, and the like) between two feature points of each pair of optimal match feature points is shortest. The distances between the feature points of the two pairs of optimal match feature points are $d\_F2f_{ik}$ and $d\_F2f_{ij}$ respectively, and $d\_F2f_{ik} < d\_F2f_{ij}$. Similarly, any one feature descriptor $f_i$ is selected from the f set, and two pairs of optimal match feature points are $(f_i, F_k)$ and $(f_i, F_m)$, where distances between the feature points of the two pairs of optimal match feature points are $d\_f2F_{ik}$ and $d\_f2F_{im}$ respectively, and $d\_f2F_{ik} < d\_f2F_{im}$.

804: Remove a one-to-many feature.

The match feature point pairs $(F_i, f_k)$ and $(F_i, f_j)$ stored in the $F_j$ set are traversed. If $d\_F2f_{ik}/d\_F2f_{ij} > th$, where th is a one-to-many threshold, for example, th=0.65, it is considered that match confidence of the feature point pairs is relatively low, and the feature point $F_i$ needs to be removed. Otherwise, the $F_i$ is preserved, and a group of updated $F^*$ is finally obtained. Similarly, a one-to-many feature is removed from the feature set, and a group of updated $f^*$ is also obtained.

805: Perform symmetry check. All feature points in the $F^*$ are traversed, and if match points stored in the $F^*$ are different from match points stored in the $f^*$, the match point in the $f^*$ is removed. Similarly, all feature points in the $f^*$ are traversed, and if match points stored in the $f^*$ are different from match points stored in the $F^*$, the feature point in the $f^*$ is removed. That is, if $F_i$ and $F_m$ in $(F_i, f_k)$ and $(f_k, F_m)$ are not a same point, the mismatched point $f_k$ is removed.

806: Perform RANSAC consistency calculation.

RANSAC consistency is calculated in remaining $F^*$s and $f^*$s, and a homography matrix H is obtained. Then, a re-projection error of a feature point set is calculated by using the following formula:

$$err = \frac{1}{N} \sum_{i=0}^{N} \left\| q_{F_i^*} - H \times q_{f_i^*} \right\|_2 \quad \text{(Formula 1.5)}$$

where N is a quantity of feature points in the set $F^*$, q represents image coordinate values of x and y of a feature point, and $\| \ \|_2$ represents an operation of obtaining a distance between two points.

807: Determine an identifier and coordinates of an identified touch-controllable device.

If err<T, where T is a re-projection error threshold, for example, T=3 pixels, it indicates that a currently extracted feature point $f^*$ successfully matches a feature $F^*$, obtained when a viewing angle $V_j$ is used, of a target C in a hardware visual feature database. The identifier C of the current touch-controllable device is returned, and the image coordinates at which the target is located is calculated according to the homography matrix H. Otherwise, operations corresponding to a next viewing angle $V_{j+1}$ and a next target C+1 are to be performed, and step 803 to step 807 are repeated, until all hardware is traversed.

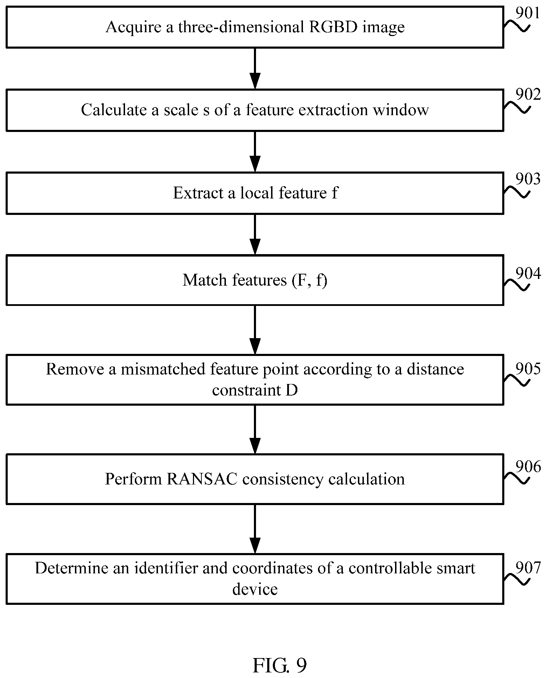

FIG. 9 is a schematic flowchart of feature identification performed by using a three-dimensional depth image.

901: Acquire a three-dimensional RGBD image.

The RGBD image is obtained by using an RGBD camera. The camera may be integrated into the control center device 310. Alternatively, the camera may be an independent apparatus, and sends the acquired RGBD image to the control center device 310. This is not limited in the present invention. The RGBD image includes an RGB image and a depth image.

902: Calculate a scale s of a feature extraction window.

A point whose coordinates are (u, v) is selected from the RGB image. It is determined, according to a corresponding depth value d(u, v), that the scale of the feature extraction window w(u, v) is s=d/D.

903: Extract a local feature f.

It is determined, by using the window scale s, that a length and a width of the window are both L×s. The local feature is extracted from the RGB image corresponding to the window. Common methods include SIFT, SURF, ORB, FREAK, and the like.

904: Match features (F, f).

A visual feature (F, D) of the Cth hardware is indexed in a hardware visual feature database. All feature descriptors $f_i$ are traversed in an f set. An F set is searched for optimal match feature points ($F_k$, $f_i$), where a distance (common distance measurement functions include a Euclidean distance, a Hamming distance, a Mahalanobis distance, and the like) between the feature points is shortest.

905: Remove a mismatched feature point according to a distance constraint D.

Two adjacent match feature point pairs ($F_i$, $f_j$) and ($F_{i+1}$, $f_{j+1}$) stored in the f set are traversed, to invoke respective 3D coordinates of the feature points, that is, D_$F_i$(x, y, z), D_$f_j$(x, y, z), D_$F_{i+1}$(x, y, z), and D_$f_{j+1}$(x, y, z). A distance d_$F_i$ between $F_i$ and $F_{i+1}$ and a distance d_$f_j$ between $f_j$ and $f_{j+1}$ are calculated. If |d_$F_i$-d_$f_j$|>Th, where Th is a mismatch threshold, for example, Th=5 mm, it indicates that the match point sets ($F_i$, $f_j$) and ($F_{i+1}$, $f_{j+1}$) are mismatched, and the two feature point pairs are removed. Otherwise, the feature point pairs are preserved, and new match feature sets F* and f* are obtained after update.

906: Perform RANSAC consistency calculation.

RANSAC consistency is calculated in remaining F*s and f*s, and a homography matrix H is obtained. A re-projection error of a feature point set is calculated by using Formula 1.5, so as to obtain err.

907: Determine an identifier and coordinates of a touch-controllable device.

If err<T, where T is a re-projection error threshold, it indicates that a currently extracted feature point f* successfully matches a feature F* of a target in the hardware visual feature database. The identifier C of the current touch-controllable device is returned, and the image coordinates at which the target is located is calculated according to the homography matrix H. Otherwise, an operation corresponding to a next target C+1 is to be performed, and step 903 to step 907 are repeated, until all hardware is traversed.

After identifying the identifier of each touch-controllable device in the video image, the control center device 310 may send the video image and the identifier of each touch-controllable device to the remote device 330. The remote device 330 may be a device with a display interface, such as a mobile phone, a tablet computer, or a computer. The remote device 330 may display the video image on the display interface, and may display the corresponding identifier of each touch-controllable device. In this way, a user can conveniently identify, from the video image displayed on the display interface of the remote device 330, the touch-controllable device and the identifier of the touch-controllable device.

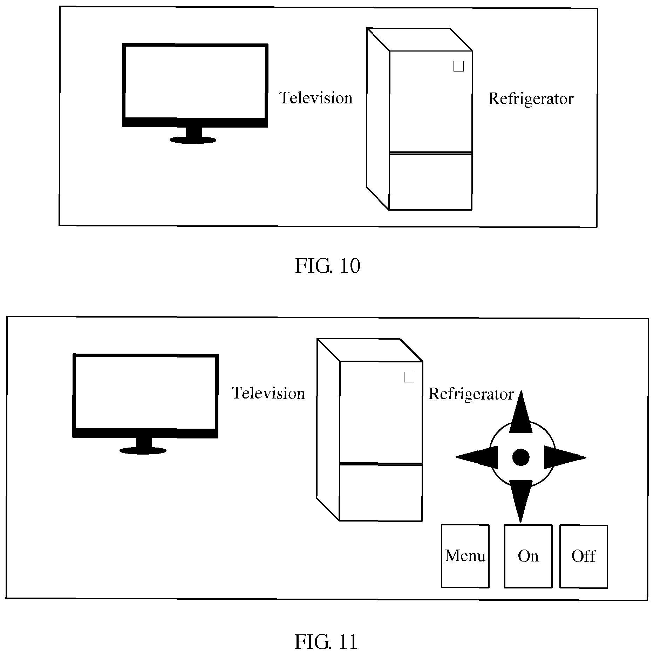

FIG. 10 is a schematic diagram of displaying a video image and a touch-controllable device on a display interface of a remote device.

When a user expects to adjust an adjustable running parameter of a touch-controllable device in the video image, the user may select the to-be-adjusted first touch-controllable device by using first input. The first input may be touch input, or may be input implemented by using another input device (for example, a mouse or a keyboard). After the user selects the first touch-controllable device, the display interface may present a control UI of the first touch-controllable device. The user may directly adjust the corresponding running parameter by using the control UI of the first touch-controllable device displayed on the display interface. The control center device 310 may receive first adjustment information sent by the remote device 330, where the first adjustment information is used to adjust a running status parameter of the first touch-controllable device. It can be understood that the first touch-controllable device is any touch-controllable device in the video image. The control center device 310 may send the first adjustment information to the first touch-controllable device. The first touch-controllable device may adjust the corresponding running status parameter according to the first adjustment information.

For example, it is assumed that touch-controllable devices in the video image include a refrigerator and a television. If the user expects to adjust an adjustable running status parameter of the refrigerator in the video image, the user may directly select an area in which the refrigerator in the video image is located. In this case, the display interface may present a control UI used for controlling the adjustable running status parameter of the refrigerator. The user may adjust the adjustable running status parameter of the refrigerator by adjusting a related parameter in the control UI.

Optionally, in another embodiment, the control UI of the touch-controllable device may alternatively be directly superposed on a video interface. In this case, the control center device 310 may further determine coordinates of the selected to-be-adjusted first touch-controllable device, and send the coordinates of the first touch-controllable device to the remote device 330. In this way, when presenting the control UI of the first touch-controllable device, the remote device 330 may present the control UI of the first touch-controllable device according to the coordinates of the first touch-controllable device, for example, may superpose the control UI of the first touch-controllable device near the coordinates of the first touch-controllable device. Optionally, in another embodiment, a video interface displayed by the remote device 330 may present only the selected first touch-controllable device and the control UI of the first touch-controllable device.

FIG. 11 is a schematic diagram of displaying a video image, a selected touch-controllable device, and a UI of the selected touch-controllable device on a display interface of a remote device. FIG. 11 is a schematic diagram of directly superposing the control UI on a video interface.

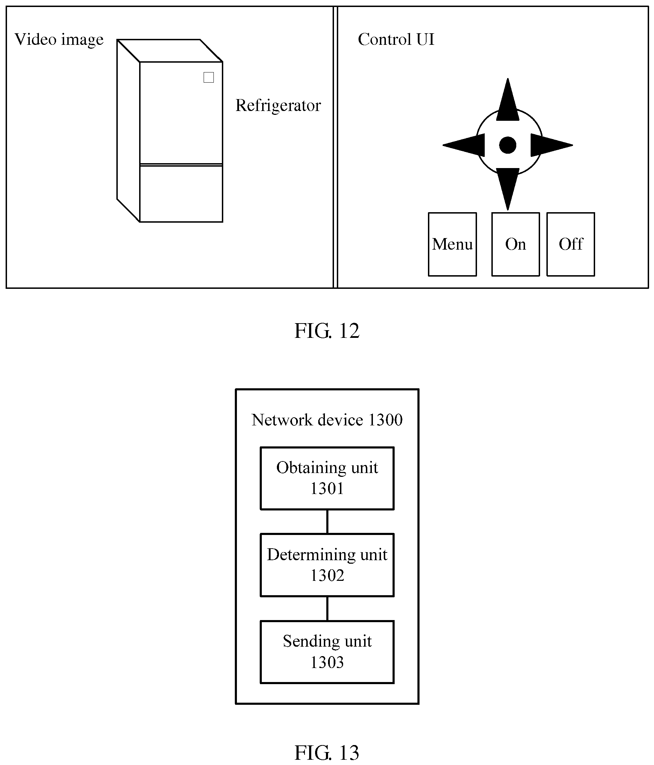

FIG. 12 is another schematic diagram of displaying a video image, a selected touch-controllable device, and a UI of the selected touch-controllable device on a display interface of a remote device. FIG. 12 is a schematic diagram of presenting only the first touch-controllable device and the control UI of the first touch-controllable device on the video interface displayed by the remote device 330.

It can be learned that, after the user selects the first touch-controllable device in the video image, the remote device 330 may present only the selected first touch-controllable device and the control UI of the first touch-controllable device on the display interface. Specifically, after the user selects one touch-controllable device in the video image, the control center device 310 may further segment the video image, and send a video image obtained by means of segmentation to the remote device 330. The video image obtained by means of segmentation may include only the first touch-controllable device selected by the user and the control UI of the first touch-controllable device. In this way, the user can view, more conveniently, the touch-controllable device that needs to be adjusted. In addition, because the video image obtained by means of segmentation includes only the to-be-adjusted first touch-controllable device, only a video of the first touch-controllable device needs to be transmitted. In this case, a video transmission quantity is reduced. This can reduce a screen delay and improve real-time performance of video image transmission.

FIG. 13 is a structural block diagram of a network device according to an embodiment of the present invention. As shown in FIG. 13, the network device 1300 includes an obtaining unit 1301, a determining unit 1302, and a sending unit 1303.

The obtaining unit 1301 is configured to obtain a video image.

The determining unit 1302 is configured to determine an identifier of each of at least one touch-controllable device in the video image.

The sending unit 1303 is configured to send the video image and the identifier of each touch-controllable device to a remote device, so that a user can control the touch-controllable device in the video image by using the remote device.

The network device 1300 shown in FIG. 13 is a control center device in a remote control system. The network device 1300 shown in FIG. 13 can obtain the video image, identify the touch-controllable device in the video image, and send the video image and the identifier of the identified touch-controllable device to the remote device. In this way, the user can view, in real time, the video image by using the remote device, and can conveniently determine, from the video image according to the identifier of the touch-controllable device, a touch-controllable device that can be remotely controlled, and further select a touch-controllable device that needs to be controlled. When the user needs to adjust an adjustable running parameter of the touch-controllable device, the user can view an actual running parameter of the controlled touch-controllable device instead of a running parameter, obtained by means of simulation by using a graphical interface, of the touch controllable device.

Optionally, in an embodiment, the determining unit 1302 is specifically configured to: perform local-feature extraction on the video image; match an extracted local feature with a visual feature of a touch-controllable device stored in a hardware database, to determine whether a visual feature, matching the local feature, of a touch-controllable device exists in the hardware database; and if the visual feature, matching the local feature, of the touch-controllable device exists in the hardware database, determine an identifier of the touch-controllable device that is included in the video image and that is corresponding to the matched visual feature. The hardware database includes attribute information of N touch-controllable devices, where the attribute information includes identifiers of the touch-controllable devices, visual features of the touch-controllable devices, hardware application programming interfaces APIs of the touch-controllable devices, and control user interfaces UIs of the touch-controllable devices.

Further, the obtaining unit 1301 is further configured to obtain the attribute information of the N touch-controllable devices. The determining unit 1302 is further configured to store the attribute information of the N touch-controllable devices in the hardware database.

Optionally, in an embodiment, the obtaining unit 1301 is specifically configured to receive attribute information sent by each of the N touch-controllable devices. Optionally, in another embodiment, the obtaining unit 1301 is specifically configured to receive an identifier sent by each of the N touch-controllable devices, and obtain, according to the identifiers of the N touch-controllable devices, the visual features of the N touch-controllable devices, the APIs of the N touch-controllable devices, and the control UIs of the N touch-controllable devices from a server that stores the attribute information of the N touch-controllable devices.

Optionally, in another embodiment, the obtaining unit 1301 is specifically configured to receive the identifier of each touch-controllable device sent by a video capture device.

Further, the obtaining unit 1301 is further configured to receive first adjustment information sent by the remote device, where the first adjustment information is used to adjust an adjustable running parameter of a first touch-controllable device, and the at least one touch-controllable device includes the first touch-controllable device. The sending unit 1303 is further configured to send the first adjustment information to the first touch-controllable device, so that the first touch-controllable device adjusts the adjustable running parameter according to the first adjustment information.

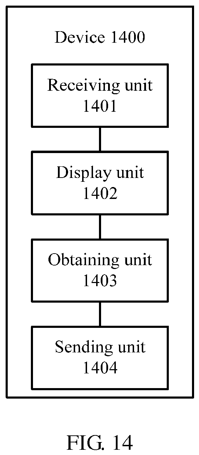

FIG. 14 is a structural block diagram of a device for controlling a touch-controllable device according to an embodiment of the present invention. As shown in FIG. 14, the device 1400 includes a receiving unit 1401 and a display unit 1402.

The receiving unit 1401 is configured to receive a video image and an identifier of each touch-controllable device that are sent by a control center device.

The display unit 1402 is configured to present the video image and the identifier of each touch-controllable device on a display interface.

The device 1400 is a remote device in a system for controlling a touch-controllable device. According to the device 1400 shown in FIG. 14, a user can conveniently view the touch-controllable device on the display interface of the device.

Further, the device 1400 further includes an obtaining unit 1403. The obtaining unit 1403 is configured to obtain first input, where the first input is used to select a first touch-controllable device, and the first touch-controllable device is a touch-controllable device in the video image. The obtaining unit 1403 is further configured to obtain a control UI of the first touch-controllable device and an API of the first touch-controllable device. The display unit 1402 is further configured to display the control UI of the first touch-controllable device on the display interface.

Further, the obtaining unit 1403 is further configured to obtain second input that is used to adjust an adjustable running parameter of the first touch-controllable device. The device 1400 further includes a sending unit 1404. The sending unit 1404 is configured to send first adjustment information to the control center, where the first adjustment information is used to adjust the adjustable running parameter of the first touch-controllable device.

A person of ordinary skill in the art may be aware that units and algorithm steps in examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that such an implementation goes beyond the scope of the present invention.

It can be clearly understood by a person skilled in the art that, for ease and brevity of description, for detailed working processes of the foregoing systems, apparatuses, and units, reference may be made to corresponding processes in the foregoing method embodiments, and details are not described herein again.

In the several embodiments provided in this application, it should be understood that the disclosed systems, apparatuses, and methods may be implemented in other manners. For example, the described apparatus embodiment is merely an example. For example, the unit division is merely logical function division and may be other division in actual implementation. For example, multiple units or components may be combined or may be integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on multiple network units. Some or all of the units may be selected according to an actual requirement, to achieve the objectives of the solutions in the embodiments.

In addition, functional units in the embodiments of the present invention may be integrated into one processing unit, or each of the units may exist alone physically, or two or more units may be integrated into one unit.

When the functions are implemented in a form of a software function unit, and are sold or used as an independent product, the functions may be stored in a computer readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) or a processor (processor) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A visual remote control method for a touch-controllable device, wherein the method is executed by a control center device in a remote control system, and the method comprises:

obtaining, by the control center device, a video image;

determining, by the control center device, an identifier of each of at least one touch-controllable device in the video image; and

sending, by the control center device, the video image and the identifier of each touch-controllable device to a remote device, so that a user can select and control a first touch-controllable device in the video image by using the remote device;

wherein the method further comprises:

sending, by the control center device, a control UI of the first touch-controllable device and an API of the first touch-controllable device to the remote device;

receiving, by the control center device, first adjustment information sent by the remote device, wherein the first adjustment information is used to adjust an adjustable running parameter of the first touch-controllable device, and

sending, by the control center device, the first adjustment information to the first touch-controllable device, so that the first touch-controllable device adjusts the adjustable running parameter according to the first adjustment information.

2. The method according to claim 1, wherein the determining, by the control center device, an identifier of each of at least one touch-controllable device in the video image comprises:

performing, by the control center device, local-feature extraction on the video image;

matching an extracted local feature with a visual feature of a touch-controllable device stored in a hardware database, to determine whether a visual feature, matching the local feature, of a touch-controllable device exists in the hardware database; and

if the visual feature, matching the local feature, of the touch-controllable device exists in the hardware database, determining an identifier of the touch-controllable device that is comprised in the video image and that is corresponding to the matched visual feature.

3. The method according to claim 2, wherein the hardware database comprises attribute information of N touch-controllable devices, wherein the attribute information comprises identifiers of the touch-controllable devices, visual features of the touch-controllable devices, hardware application programming interfaces, APIs, of the touch-controllable devices, and control user interfaces UIs of the touch-controllable devices.

4. The method according to claim 3, wherein before the determining, by the control center device, an identifier of each of at least one touch-controllable device in the video image, the method further comprises:

obtaining, by the control center device, the attribute information of the N touch-controllable devices; and

storing, by the control center device, the attribute information of the N touch-controllable devices in the hardware database.

5. The method according to claim 4, wherein the obtaining, by the control center device, the attribute information of the N touch-controllable devices comprises:

receiving, by the control center device, attribute information sent by each of the N touch-controllable devices; or

receiving, by the control center device, an identifier sent by each of the N touch-controllable devices, and obtaining, according to the identifiers of the N touch-controllable devices, the visual features of the N touch-controllable devices, the APIs of the N touch-controllable devices, and the control UIs of the N touch-controllable devices from a server that stores the attribute information of the N touch-controllable devices.

6. The method according to claim 1, wherein the determining, by the control center device, an identifier of each of at least one touch-controllable device in the video image comprises:

receiving, by the control center device, the identifier of each touch-controllable device sent by a video capture device.

7. A visual remote control system for a touch-controllable device, wherein the system comprises a control center device, a remote device, and N touch-controllable devices, wherein N is a positive integer greater than or equal to 1;

the control center device is configured to obtain a video image;

the control center device is further configured to determine an identifier of each touch-controllable device that is in the video image and that is in the N touch-controllable devices;

the control center device is further configured to send the video image and the identifier of each touch-controllable device to the remote device;

the remote device is configured to receive the video image and the identifier of each touch-controllable device that are sent by the control center device; and

the remote device is further configured to present the video image and the identifier of each touch-controllable device on a display interface;

wherein the remote device is further configured to obtain first input, wherein the first input is used to select a first touch-controllable device, and the first touch-controllable device is a touch-controllable device in the video image;

the remote device is further configured to obtain a control UI of the first touch-controllable device and an API of the first touch-controllable device; and

the remote device is further configured to display the control UI of the first touch-controllable device on the display interface;

wherein the remote device is further configured to obtain second input that is used to adjust an adjustable running parameter of the first touch-controllable device, and send first adjustment information to the control center, wherein the first adjustment information is used to adjust the adjustable running parameter of the first touch-controllable device;

the control center device is further configured to send the received first adjustment information to the first touch-controllable device; and

the first touch-controllable device is configured to adjust the corresponding adjustable running parameter according to the first adjustment information.

8. The system according to claim 7, wherein the control center device is specifically configured to: perform local-feature extraction on the video image; match an extracted local feature with a visual feature of a touch-controllable device stored in a hardware database, to determine whether a visual feature, matching the local feature, of a touch-controllable device exists in the hardware database; and if the visual feature, matching the local feature, of the touch-controllable device exists in the hardware database, determine an identifier of the touch-controllable device that is comprised in the video image and that is corresponding to the matched visual feature.

9. The system according to claim 8, wherein the hardware database comprises attribute information of the N touch-controllable devices, wherein the attribute information comprises identifiers of the touch-controllable devices, visual features of the touch-controllable devices, hardware application programming interfaces APIs of the touch-controllable devices, and control user interfaces UIs of the touch-controllable devices.

10. The system according to claim 9, wherein the control center device is further configured to obtain the attribute information of the N touch-controllable devices, and store the attribute information of the N touch-controllable devices in the hardware database.

11. The system according to claim 10, wherein the control center device is specifically configured to receive attribute information sent by each of the N touch-controllable devices; or

the control center device is specifically configured to receive an identifier sent by each of the N touch-controllable devices, and obtain, according to the identifiers of the N touch-controllable devices, the visual features of the N touch-controllable devices, the APIs of the N touch-controllable devices, and the control UIs of the N touch-controllable devices from a server that stores the attribute information of the N touch-controllable devices.

12. The system according to claim 7, wherein the system further comprises a video capture device, wherein the video capture device is configured to obtain the video image, and determine the identifier of each touch-controllable device in the video image;

the video capture device is further configured to send the video image and the identifier of each touch-controllable device to the control center device; and

the control center device specifically receives the video image and the identifier of each touch-controllable device that are sent by the video capture device.

**Patentansprüche**

1. Verfahren zur visuellen Fernsteuerung einer durch Berührung steuerbaren Vorrichtung, wobei das Verfahren durch eine Steuerzentrumsvorrichtung in einem Fernsteuerungssystem ausgeführt wird, und das Verfahren umfasst:

Abrufen eines Videobildes durch die Steuerzentrumsvorrichtung;

Bestimmen einer Kennung einer jeden von mindestens einer durch Berührung steuerbaren Vorrichtung im Videobild durch die Steuerzentrumsvorrichtung;

Senden des Videobildes und der Kennung jeder durch Berührung steuerbaren Vorrichtung durch die Steuerzentrumsvorrichtung an eine entfernte Vorrichtung, so dass ein Benutzer eine erste durch Berührung steuerbare Vorrichtung im Videobild durch Verwenden der entfernten Vorrichtung auswählen und steuern kann;

wobei das Verfahren ferner umfasst:

Senden einer Steuerungs-UI der ersten durch Berührung steuerbaren Vorrichtung und einer API der ersten durch Berührung steuerbaren Vorrichtung durch die Steuerzentrumsvorrichtung an die entfernte Vorrichtung;

Empfangen erster Anpassungsinformationen, die durch die entfernte Vorrichtung gesendet werden, durch die Steuerzentrumsvorrichtung, wobei die ersten Anpassungsinformationen zum Anpassen eines anpassbaren Betriebsparameters der ersten durch Berührung steuerbaren Vorrichtung verwendet werden, und

Senden der ersten Anpassungsinformationen durch die Steuerzentrumsvorrichtung an die erste durch Berührung steuerbare Vorrichtung, so dass die erste durch Berührung steuerbare Vorrichtung den anpassbaren Betriebsparameter gemäß den ersten Anpassungsinformationen anpasst.

2. Verfahren nach Anspruch 1, wobei das Bestimmen einer Kennung einer jeden von mindestens einer durch Berührung steuerbaren Vorrichtung im Videobild durch die Steuerzentrumsvorrichtung umfasst:

Durchführen von Extraktion eines lokalen Merkmals auf dem Videobild durch die Steuerzentrumsvorrichtung;

Vergleichen eines extrahierten lokalen Merkmals mit einem visuellen Merkmal einer durch Berührung steuerbaren Vorrichtung, das in einer Hardware-Datenbank gespeichert ist, um zu bestimmen, ob ein visuelles Merkmal einer durch Berührung steuerbaren Vorrichtung, das mit dem lokalen Merkmal übereinstimmt, in der Hardware-Datenbank vorhanden ist; und

Bestimmen, wenn das visuelle Merkmal einer durch Berührung steuerbaren Vorrichtung, das mit dem lokalen Merkmal übereinstimmt, in der Hardware-Datenbank vorhanden ist, einer Kennung der durch Berührung steuerbaren Vorrichtung, die im Videobild umfasst ist und die dem übereinstimmenden visuellen Merkmal entspricht.

3. Verfahren nach Anspruch 2, wobei die Hardware-Datenbank Attributinformationen von N durch Berührung steuerbaren Vorrichtungen umfasst, wobei die Attributinformationen Kennungen der durch Berührung steuerbaren Vorrichtungen, visuelle Merkmale der durch Berührung steuerbaren Vorrichtungen, Hardware-Anwendungsprogrammschnittstellen, APIs, der durch Berührung steuerbaren Vorrichtungen und Steuerungs-Benutzerschnittstellen, UIs, der durch Berührung steuerbaren Vorrichtungen umfassen.

4. Verfahren nach Anspruch 3, wobei das Verfahren vor dem Bestimmen einer Kennung einer jeden von mindestens einer durch Berührung steuerbaren Vorrichtung im Videobild durch die Steuerzentrumsvorrichtung ferner umfasst:

Abrufen der Attributinformationen der N durch Berührung steuerbaren Vorrichtungen durch die Steuerzentrumsvorrichtung; und

Speichern der Attributinformationen der N durch Berührung steuerbaren Vorrichtungen durch die Steuerzentrumsvorrichtung in der Hardware-Datenbank.

5. Verfahren nach Anspruch 4, wobei das Abrufen der Attributinformationen der N durch Berührung steuerbaren Vorrichtungen durch die Steuerzentrumsvorrichtung umfasst:

Empfangen von Attributinformationen, die durch jede der N durch Berührung steuerbaren Vorrichtungen gesendet werden, durch die Steuerzentrumsvorrichtung; oder

Empfangen durch die Steuerzentrumsvorrichtung einer Kennung, die durch jede der N durch Berührung steuerbaren Vorrichtungen gesendet wird, und Abrufen gemäß den Kennungen der N durch Berührung steuerbaren Vorrichtungen der visuellen Merkmale der N durch Berührung steuerbaren Vorrichtungen, der APIs der N durch Berührung steuerbaren Vorrichtungen und der Steuerungs-UIs der N durch Berührung steuerbaren Vorrichtungen von einem Server, der die Attributinformationen der N durch Berührung steuerbaren Vorrichtung speichert.

6. Verfahren nach Anspruch 1, wobei das Bestimmen einer Kennung einer jeden von mindestens einer durch Berührung steuerbaren Vorrichtung im Videobild durch die Steuerzentrumsvorrichtung umfasst:

Empfangen der Kennung jeder durch Berührung steuerbaren Vorrichtung, die durch eine Videoaufnahmevorrichtung gesendet wird, durch die Steuerzentrumsvorrichtung.

7. System zur visuellen Fernsteuerung einer durch Berührung steuerbaren Vorrichtung, wobei das System eine Steuerzentrumsvorrichtung, eine entfernte Vorrichtung und N durch Berührung steuerbare Vorrichtungen umfasst, wobei N eine positive ganze Zahl größer oder gleich 1 ist; die Steuerzentrumsvorrichtung zum Abrufen eines Videobildes ausgelegt ist; die Steuerzentrumsvorrichtung ferner so ausgelegt ist, dass sie eine Kennung jeder durch Berührung steuerbaren Vorrichtung bestimmt, die im Videobild ist und die bei den N durch Berührung steuerbaren Vorrichtungen ist; die Steuerzentrumsvorrichtung ferner zum Senden des Videobildes und der Kennung jeder durch Berührung steuerbaren Vorrichtung an die entfernte Vorrichtung ausgelegt ist; die entfernte Vorrichtung zum Empfangen des Videobildes und der Kennung jeder durch Berührung steuerbaren Vorrichtung ausgelegt ist, die durch die Steuerzentrumsvorrichtung gesendet werden; und die entfernte Vorrichtung zum Darstellen des Videobildes und der Kennung jeder durch Berührung steuerbaren Vorrichtung auf einer Anzeigeschnittstelle ausgelegt ist; wobei die entfernte Vorrichtung ferner zum Erhalten einer ersten Eingabe ausgelegt ist, wobei die erste Eingabe zum Auswählen einer ersten durch Berührung steuerbaren Vorrichtung verwendet wird, und die erste durch Berührung steuerbare Vorrichtung eine durch Berührung steuerbare Vorrichtung im Videobild ist; die entfernte Vorrichtung ferner zum Abrufen einer Steuerungs-UI der ersten durch Berührung steuerbaren Vorrichtung und einer API der ersten durch Berührung steuerbaren Vorrichtung ausgelegt ist; die entfernte Vorrichtung ferner zum Anzeigen der Steuerungs-UI der ersten durch Berührung steuerbaren Vorrichtung auf der Anzeigeschnittstelle ausgelegt ist; wobei die entfernte Vorrichtung ferner zum Erhalten einer zweiten Eingabe, die zum Anpassen eines anpassbaren Betriebsparameters der ersten durch Berührung steuerbaren Vorrichtung verwendet wird, und Senden erster Anpassungsinformationen an das Steuerzentrum ausgelegt ist, wobei die ersten Anpassungsinformationen zum Anpassen des anpassbaren Betriebsparameters der ersten durch Berührung steuerbaren Vorrichtung verwendet werden; die Steuerzentrumsvorrichtung ferner zum Senden der empfangenen ersten Anpassungsinformationen an die erste durch Berührung steuerbare Vorrichtung ausgelegt ist; und die erste durch Berührung steuerbare Vorrichtung zum Anpassen des entsprechenden anpassbaren Betriebsparameters gemäß den ersten Anpassungsinformationen ausgelegt ist.

8. System nach Anspruch 7, wobei die Steuerzentrumsvorrichtung insbesondere ausgelegt ist zum: Durchführen von Extraktion eines lokalen Merkmals auf dem Videobild; Vergleichen eines extrahierten lokalen Merkmals mit einem visuellen Merkmal einer durch Berührung steuerbaren Vorrichtung, das in einer Hardware-Datenbank gespeichert ist, um zu bestimmen, ob ein visuelles Merkmal der durch Berührung steuerbaren Vorrichtung, das mit dem lokalen Merkmal übereinstimmt, in der Hardware-Datenbank vorhanden ist; und Bestimmen, wenn das visuelle Merkmal der durch Berührung steuerbaren Vorrichtung, das mit dem lokalen Merkmal übereinstimmt, in der Hardware-Datenbank vorhanden ist, einer Kennung der durch Berührung steuerbaren Vorrichtung, die im Videobild umfasst ist und die dem übereinstimmenden visuellen Merkmal entspricht.

9. System nach Anspruch 8, wobei die Hardware-Datenbank Attributinformationen der N durch Berührung steuerbaren Vorrichtungen umfasst, wobei die Attributinformationen Kennungen der durch Berührung steuerbaren Vorrichtungen, visuelle Merkmale der durch Berührung steuerbaren Vorrichtungen, Hardware-Anwendungsprogrammschnittstellen APIs der durch Berührung steuerbaren Vorrichtungen und Steuerungs-Benutzerschnittstellen, UIs, der durch Berührung steuerbaren Vorrichtungen umfassen.

10. System nach Anspruch 9, wobei die Steuerzentrumsvorrichtung ferner zum Abrufen der Attributinformationen der N durch Berührung steuerbaren Vorrichtungen und Speichern der Attributinformationen der N durch Berührung steuerbaren Vorrichtungen in der Hardware-Datenbank ausgelegt ist.

11. System nach Anspruch 10, wobei die Steuerzentrumsvorrichtung insbesondere zum Empfangen von Attributinformationen ausgelegt ist, die durch jede der N durch Berührung steuerbaren Vorrichtungen gesendet werden; oder die Steuerzentrumsvorrichtung insbesondere zum Empfangen einer Kennung, die durch jede der N durch Berührung steuerbaren Vorrichtungen gesendet wird, und Abrufen gemäß den Kennungen der N durch Berührung steuerbaren Vorrichtungen der visuellen Merkmale der N durch Berührung steuerbaren Vorrichtungen, der APIs der N durch Berührung steuerbaren Vorrichtungen und der Steuerungs-UIs der N durch Berührung steuerbaren Vorrichtungen von einem Server ausgelegt ist, der die Attributinformationen der N durch Berührung steuerbaren Vorrichtung speichert.

**12.** System nach Anspruch 7, wobei das System ferner eine Videoaufnahmevorrichtung umfasst, wobei die Videoaufnahmevorrichtung zum Abrufen des Videobildes und Bestimmen der Kennung jeder durch Berührung steuerbaren Vorrichtung im Videobild ausgelegt ist;
die Videoaufnahmevorrichtung ferner zum Senden des Videobildes und der Kennung jeder durch Berührung steuerbaren Vorrichtung an die Steuerzentrumsvorrichtung ausgelegt ist; und
die Steuerzentrumsvorrichtung insbesondere das Videobild und die Kennung jeder durch Berührung steuerbaren Vorrichtung empfängt, die durch die Videoaufnahmevorrichtung gesendet werden.

## Revendications

**1.** Procédé de commande visuelle à distance pour un dispositif à commande tactile, le procédé étant exécuté par un dispositif de centre de commande dans un système de commande à distance, et le procédé comprenant :

l'obtention, par le dispositif de centre de commande, d'une image vidéo ;
la détermination, par le dispositif de centre de commande, d'un identifiant de chacun d'au moins un dispositif à commande tactile dans l'image vidéo ; et
l'envoi, par le dispositif de centre de commande, de l'image vidéo et de l'identifiant de chaque dispositif à commande tactile à un dispositif à distance, de sorte qu'un utilisateur puisse sélectionner et commander un premier dispositif à commande tactile dans l'image vidéo grâce à l'utilisation du dispositif à distance ;
le procédé comprenant en outre :

l'envoi, par le dispositif de centre de commande, d'une UI de commande du premier dispositif à commande tactile et d'une API du premier dispositif à commande tactile, au dispositif à distance ;
la réception, par le dispositif de centre de commande, de premières informations d'ajustement envoyées par le dispositif à distance, les premières informations d'ajustement étant utilisées pour ajuster un paramètre d'exploitation ajustable du premier dispositif à commande tactile, et
l'envoi, par le dispositif de centre de commande, des premières informations d'ajustement au premier dispositif à commande tactile, de sorte que le premier dispositif à commande tactile ajuste le paramètre d'exploitation ajustable en fonction des premières informations d'ajustement.

**2.** Procédé selon la revendication 1, dans lequel la détermination, par le dispositif de centre de commande, d'un identifiant de chacun d'au moins un dispositif à commande tactile dans l'image vidéo comprend :

la réalisation, par le dispositif de centre de commande, d'une extraction de propriété locale sur l'image vidéo ;
la mise en concordance d'une propriété locale extraite avec une propriété visuelle d'un dispositif à commande tactile stockée dans une base de données de matériel, pour déterminer si une propriété visuelle, concordant avec la propriété locale, d'un dispositif à commande tactile existe dans la base de données de matériel ; et
si la propriété visuelle, concordant avec la propriété locale, du dispositif à commande tactile existe dans la base de données de matériel, la détermination d'un identifiant du dispositif à commande tactile qui est compris dans l'image vidéo et qui correspond à la propriété visuelle concordante.

**3.** Procédé selon la revendication 2, dans lequel la base de données de matériel comprend des informations d'attribut de N dispositifs à commande tactile, les informations d'attribut comprenant des identifiants des dispositifs à commande tactile, des propriétés visuelles des dispositifs à commande tactile, des interfaces de programmation d'application, API, de matériel des dispositifs à commande tactile, et des interfaces d'utilisateur, UI, de commande des dispositifs à commande tactile.

**4.** Procédé selon la revendication 3, dans lequel avant la détermination, par le dispositif de centre de commande, d'un identifiant de chacun d'au moins un dispositif à commande tactile dans l'image vidéo, le procédé comprend en outre :

l'obtention, par le dispositif de centre de commande, des informations d'attribut des N dispositifs à commande tactile ; et
le stockage, par le dispositif de centre de commande, des informations d'attribut des N dispositifs à commande tactile dans la base de données de matériel.

**5.** Procédé selon la revendication 4, dans lequel l'obtention, par le dispositif de centre de commande, des informations d'attribut des N dispositifs à commande tactile comprend :

la réception, par le dispositif de centre de commande, d'informations d'attribut envoyées par chacun des N dispositifs à commande tactile ; ou

la réception, par le dispositif de centre de commande, d'un identifiant envoyé par chacun des N dispositifs à commande tactile, et l'obtention, en fonction des identifiants des N dispositifs à commande tactile, des propriétés visuelles des N dispositifs à commande tactile, des API des N dispositifs à commande tactile, et des UI de commande des N dispositifs à commande tactile à partir d'un serveur qui stocke les informations d'attribut des N dispositifs à commande tactile.

**6.** Procédé selon la revendication 1, dans lequel la détermination, par le dispositif de centre de commande, d'un identifiant de chacun d'au moins un dispositif à commande tactile dans l'image vidéo comprend :
la réception, par le dispositif de centre de commande, de l'identifiant de chaque dispositif à commande tactile envoyé par un dispositif de capture vidéo.

**7.** Système de commande visuelle à distance pour un dispositif à commande tactile, le système comprenant un dispositif de centre de commande, un dispositif à distance, et N dispositifs à commande tactile, où N est un nombre entier positif supérieur ou égal à 1 ;
le dispositif de centre de commande est configuré pour obtenir une image vidéo ;
le dispositif de centre de commande est configuré en outre pour déterminer un identifiant de chaque dispositif à commande tactile qui se trouve dans l'image vidéo et qui se trouve dans les N dispositifs à commande tactile ;
le dispositif de centre de commande est configuré en outre pour envoyer l'image vidéo et l'identifiant de chaque dispositif à commande tactile au dispositif à distance ;
le dispositif à distance est configuré pour recevoir l'image vidéo et l'identifiant de chaque dispositif à commande tactile qui sont envoyés par le dispositif de centre de commande ; et
le dispositif à distance est configuré en outre pour présenter l'image vidéo et l'identifiant de chaque dispositif à commande tactile sur une interface d'affichage ; dans lequel le dispositif à distance est configuré en outre pour obtenir une première entrée, la première entrée étant utilisée pour sélectionner un premier dispositif à commande tactile, et le premier dispositif à commande tactile étant un dispositif à commande tactile dans l'image vidéo ;
le dispositif à distance est configuré en outre pour obtenir une UI de commande du premier dispositif à commande tactile et une API du premier dispositif à commande tactile ; et
le dispositif à distance est configuré en outre pour afficher l'UI de commande du premier dispositif à commande tactile sur l'interface d'affichage ;
dans lequel le dispositif à distance est configuré en outre pour obtenir une deuxième entrée qui est utilisée pour ajuster un paramètre d'exploitation ajustable du premier dispositif à commande tactile, et pour envoyer des premières informations d'ajustement au centre de commande, les premières informations d'ajustement étant utilisées pour ajuster le paramètre d'exploitation ajustable du premier dispositif à commande tactile ;
le dispositif de centre de commande est configuré en outre pour envoyer les premières informations d'ajustement reçues au premier dispositif à commande tactile ; et
le premier dispositif à commande tactile est configuré pour ajuster le paramètre d'exploitation ajustable correspondant en fonction des premières informations d'ajustement.

**8.** Système selon la revendication 7, dans lequel le dispositif de centre de commande est configuré spécifiquement pour : réaliser une extraction de propriété locale sur l'image vidéo ; faire concorder une propriété locale extraite à une propriété visuelle d'un dispositif à commande tactile stockée dans une base de données de matériel, pour déterminer si une propriété visuelle, concordant avec la propriété locale, d'un dispositif à commande tactile existe dans la base de données de matériel ; et si la propriété visuelle, concordant avec la propriété locale du dispositif à commande tactile existe dans la base de données de matériel, déterminer un identifiant du dispositif à commande tactile qui est compris dans l'image vidéo et qui correspond à la propriété visuelle concordante.

**9.** Système selon la revendication 8, dans lequel la base de données de matériel comprend des informations d'attribut des N dispositifs à commande tactile, les informations d'attribut comprenant des identifiants des dispositifs à commande tactile, des propriétés visuelles des dispositifs à commande tactile, des interfaces de programmation d'application, API, de matériel des dispositifs à commande tactile, et des interfaces d'utilisateur, UI, de commande des dispositifs à commande tactile.

**10.** Système selon la revendication 9, dans lequel le dispositif de centre de commande est configuré en outre pour obtenir des informations d'attribut des N dispositifs à commande tactile, et stocker les informations d'attribut des N dispositifs à commande tactile dans la base de données de matériel.

11. Système selon la revendication 10, dans lequel le dispositif de centre de commande est configuré spécifiquement pour recevoir des informations d'attribut envoyées par chacun des N dispositifs à commande tactile ; ou le dispositif de centre de commande est configuré spécifiquement pour recevoir un identifiant envoyé par chacun des N dispositifs à commande tactile, et obtenir, en fonction des identifiants des N dispositifs à commande tactile, les propriétés visuelles des N dispositifs à commande tactile, les API des N dispositifs à commande tactile, et les UI de commande des N dispositifs à commande tactile à partir d'un serveur qui stocke les informations d'attribut des N dispositifs à commande tactile.

12. Système selon la revendication 7, dans lequel le système comprend en outre un dispositif de capture vidéo, le dispositif de capture vidéo étant configuré pour obtenir l'image vidéo, et déterminer l'identifiant de chaque dispositif à commande tactile dans l'image vidéo ;
le dispositif de capture vidéo étant configuré en outre pour envoyer l'image vidéo et l'identifiant de chaque dispositif à commande tactile au dispositif de centre de commande ; et
le dispositif de centre de commande recevant spécifiquement l'image vidéo et l'identifiant de chaque dispositif à commande tactile qui sont envoyés par le dispositif de capture vidéo.

A control center device obtains a video image 101

The control center device determines an identifier of each of at least one controllable smart device in the video image 102

The control center device sends the video image and the identifier of each controllable smart device to a remote device 103

FIG. 1

System 200

Video capture device 203

Controllable smart device

Controllable smart device

Controllable smart device

Control center device 201

Remote device 202

FIG. 2

FIG. 3

| Hardware identifier | Visual feature | API | | | Control UI |
|---|---|---|---|---|---|
| | | Status parameter | Control parameter | Control instruction code | |
| Lamp | Feature of a two-dimensional image or a three-dimensional depth image | On: 1<br>Off: 0<br>Brightness: 1-100 | On<br>Off<br>Brightness | 0x00<br>0x01<br>0x100-0x1FF | Lamp — On / Off / Brightness △ 30 ▽ |
| Television | Feature of a two-dimensional image or a three-dimensional depth image | On: 1<br>Off: 0<br>Channel: 1-100 | On<br>Off<br>Channel | 0x00<br>0x01<br>0x100-0x1FF | Television — 50 — Channel △ On, 50 ▽ Off |

FIG. 4

EP 3 340 615 B1

| | |
|---|---|
| Input a quantity K of viewing angles | 501 |
| Acquire an RGB image from a viewing angle $V_j$ | 502 |
| Extract a local feature $F_j$ | 503 |
| Remove similar feature points | 504 |
| Add a visual feature, obtained when the viewing angle $V_j$ is used, of a controllable smart device | 505 |

FIG. 5

FIG. 6

Input a quantity K of viewing angles                                                701

Acquire an image from a viewing angle $V_j$                                          702

Extract a local feature (s, $F_j$, $D_j$) of a window w(u, v)                        703

Add a visual feature, obtained when the viewing angle $V_j$ is used, of a controllable smart device                                                704

Record a visual feature that is obtained when a next viewing angle $V_{j+1}$ is used                                                705

FIG. 7

```
┌─────────────────────────────────────────────────────┐
│              Obtain an RGB image                      │ ⟿ 801
└─────────────────────────────────────────────────────┘
                          │
                          ▼
┌─────────────────────────────────────────────────────┐
│              Extract a local feature f                │ ⟿ 802
└─────────────────────────────────────────────────────┘
                          │
                          ▼
┌─────────────────────────────────────────────────────┐
│              Match features (F, f)                    │ ⟿ 803
└─────────────────────────────────────────────────────┘
                          │
                          ▼
┌─────────────────────────────────────────────────────┐
│           Remove a one-to-many feature                │ ⟿ 804
└─────────────────────────────────────────────────────┘
                          │
                          ▼
┌─────────────────────────────────────────────────────┐
│              Perform symmetry check                   │ ⟿ 805
└─────────────────────────────────────────────────────┘
                          │
                          ▼
┌─────────────────────────────────────────────────────┐
│        Perform RANSAC consistency calculation         │ ⟿ 806
└─────────────────────────────────────────────────────┘
                          │
                          ▼
┌─────────────────────────────────────────────────────┐
│  Determine an identifier and coordinates of an        │
│      identified controllable smart device             │ ⟿ 807
└─────────────────────────────────────────────────────┘
```

FIG. 8

```
┌─────────────────────────────────────────────────────┐
│         Acquire a three-dimensional RGBD image        │  901
└─────────────────────────────────────────────────────┘
                          │
                          ▼
┌─────────────────────────────────────────────────────┐
│      Calculate a scale s of a feature extraction window │  902
└─────────────────────────────────────────────────────┘
                          │
                          ▼
┌─────────────────────────────────────────────────────┐
│                  Extract a local feature f            │  903
└─────────────────────────────────────────────────────┘
                          │
                          ▼
┌─────────────────────────────────────────────────────┐
│                  Match features (F, f)                │  904
└─────────────────────────────────────────────────────┘
                          │
                          ▼
┌─────────────────────────────────────────────────────┐
│  Remove a mismatched feature point according to a distance │  905
│                    constraint D                       │
└─────────────────────────────────────────────────────┘
                          │
                          ▼
┌─────────────────────────────────────────────────────┐
│           Perform RANSAC consistency calculation      │  906
└─────────────────────────────────────────────────────┘
                          │
                          ▼
┌─────────────────────────────────────────────────────┐
│  Determine an identifier and coordinates of a controllable smart │  907
│                      device                           │
└─────────────────────────────────────────────────────┘
```

FIG. 9

FIG. 10

FIG. 11

| Video image | Control UI |
|---|---|
| Refrigerator | Menu On Off |

FIG. 12

Network device 1300

Obtaining unit
1301

Determining unit
1302

Sending unit
1303

FIG. 13

Device 1400

Receiving unit
1401

Display unit
1402

Obtaining unit
1403

Sending unit
1404

FIG. 14

**EP 3 340 615 B1**

**REFERENCES CITED IN THE DESCRIPTION**

**Patent documents cited in the description**

- EP 2372495 A